(19) Europäisches Patentamt / European Patent Office / Office européen des brevets

(11) **EP 4 178 218 B1**

(12) **FASCICULE DE BREVET EUROPEEN**

(45) Date de publication et mention
de la délivrance du brevet:
**22.05.2024 Bulletin 2024/21**

(21) Numéro de dépôt: **22203995.0**

(22) Date de dépôt: **27.10.2022**

(51) Classification Internationale des Brevets (IPC):
**H04N 25/65** $^{(2023.01)}$ **H04N 25/77** $^{(2023.01)}$

(52) Classification Coopérative des Brevets (CPC):
**H04N 25/65; H04N 25/77**

(54) **PIXEL POUR IMAGEUR INFRAROUGE INTÉGRANT UNE POLARISATION BDI ET UNE REINITIALISATION ACTIVE**

PIXEL FÜR INFRAROT-BILDGEBER MIT BDI-VORSPANNUNG UND AKTIVER RÜCKSETZUNG

PIXEL FOR INFRARED IMAGER INCORPORATING BDI BIAS AND ACTIVE RESET

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **05.11.2021 FR 2111758**

(43) Date de publication de la demande:
**10.05.2023 Bulletin 2023/19**

(73) Titulaire: **Commissariat à l'énergie atomique et aux énergies alternatives
75015 Paris (FR)**

(72) Inventeur: **NICOLAS, Jean-Alain
38054 GRENOBLE CEDEX 09 (FR)**

(74) Mandataire: **Brevalex
Tour Trinity
1 B Place de la Défense
92400 Courbevoie (FR)**

(56) Documents cités:
**US-A1- 2006 023 092**

- FOWLER B ET AL: "LOW NOISE READOUT USING ACTIVE RESET FOR CMOS APS", PROCEEDINGS OF SPIE, IEEE, US, vol. 3965, 1 janvier 2000 (2000-01-01), pages 126-135, XP001062352, DOI: 10.1117/12.385430 ISBN: 978-1-62841-730-2

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

## DOMAINE TECHNIQUE

La présente invention se rapporte au domaine des dispositifs d'imagerie, et en particulier visible ou infrarouge. Elle s'applique tout particulièrement aux imageurs infrarouge refroidis et est relative aux circuits de lecture des éléments photo-détecteurs, ainsi qu'à leur polarisation.

Elle concerne plus précisément un circuit ou pixel de lecture amélioré en termes de rendement d'injection et de réduction du bruit de réinitialisation et qui peut être adapté notamment à des applications faible flux.

## ÉTAT DE LA TECHNIQUE ANTÉRIEURE

Lorsqu'une scène est observée par un imageur infrarouge formé d'une matrice d'éléments de détection, chaque élément de détection délivre un courant proportionnel à l'éclairement reçu par cet élément.

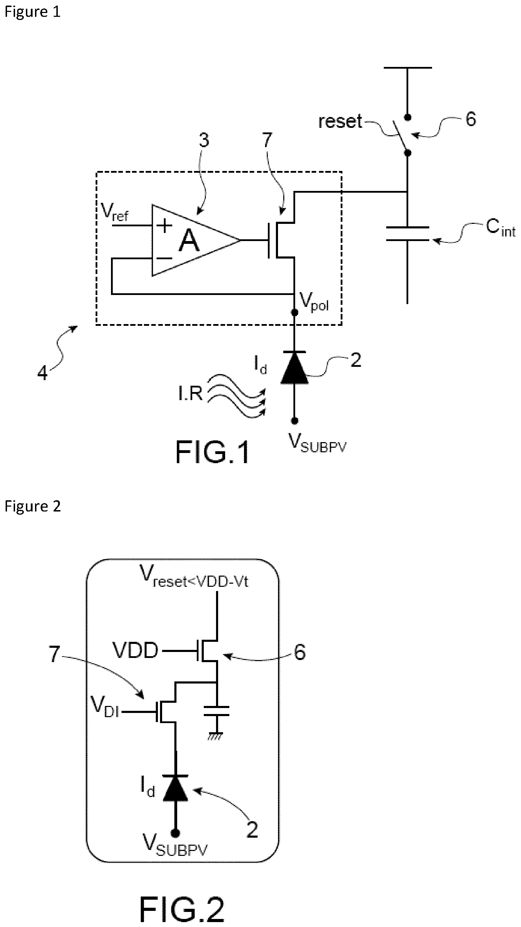

Une structure existante d'élément de détection infrarouge IR est illustré sur la figure 1. L'élément de détection comporte une photo-diode 2 associée et connectée à un circuit de polarisation. Le courant issu de la photo-diode 2 est intégré au moyen d'une capacité d'intégration Cint pendant une période de temps prédéfinie. Le circuit de polarisation, la capacité et un transistor de réinitialisation font partie d'un circuit appelé « circuit de lecture » ou « pixel de lecture » auquel la photodiode peut être intégrée. A la fin de cette période, chaque pixel de lecture fournit une information sur la partie de la scène observée par la photodiode 2 auquel il est associé.

L'état d'une scène observée peut donc être suivi au moyen de la tension aux bornes de la capacité d'intégration $C_{int}$. Dans l'exemple illustré, le courant émis par la photodiode 2 traverse une structure particulière dite d'injection directe à contre-réaction (BDI pour « Buffered Direct Injection ») qui sert à polariser la photodiode 2 de manière appropriée et atteint la capacité $C_{int}$.

Cette structure comprend un transistor 7 de polarisation, appelé transistor d'injection directe, qui est couplé à la photodiode 2 et au condensateur d'intégration $C_{int}$, auquel un amplificateur 3, en particulier un amplificateur différentiel de gain A est associé. Une entrée de cet amplificateur est connectée à une électrode de source du transistor 7 du transistor d'injection directe. La sortie régit la tension de grille du transistor 7 de polarisation. La source du transistor 7 étant connectée à une borne de la photodiode 2 il y a donc une contre-réaction établie sur un signal servant à polariser la photodiode 2. Une telle architecture répond à un besoin de diminution de l'impédance d'entrée du circuit de lecture puisqu'elle peut permettre une réduction d'un facteur A (A étant le gain de l'amplificateur) par rapport à l'utilisation d'une structure plus conventionnelle dite d'injection directe (DI) sans amplificateur et contre-réaction. La structure BDI permet plus précisément d'obtenir ces performances améliorées sur l'impédance d'entrée, tout en limitant le nombre de transistors supplémentaires nécessaires.

Avant chaque nouvelle image, la capacité d'intégration $C_{int}$ de chaque pixel doit être réinitialisée à sa tension de référence, c'est ce que l'on appelle la phase de réinitialisation (« reset » selon la terminologie anglosaxonne). Cette phase est généralement réalisée par l'intermédiaire d'un transistor 6 monté en interrupteur qui est fermé (passant) de sorte à venir connecter la capacité d'intégration $C_{int}$ à une tension de référence lors de la réinitialisation, et qui est ouvert lors de la phase d'intégration.

Toutefois, lors de cette étape de réinitialisation, un bruit appelé le bruit de réinitialisation (encore appelé « bruit de reset ») est généré. En effet lors de la phase de réinitialisation le transistor utilisé en interrupteur reçoit à sa grille une tension suffisante pour que celui soit dans le mode linéaire et soit équivalent à un interrupteur fermé de résistance Ron. Cette résistance génère alors un bruit thermique.

La fin de la phase de réinitialisation et le début de l'intégration est marquée par l'ouverture de l'interrupteur, figeant ainsi le bruit thermique sur la capacité d'intégration Cint, ce qui implique une inconnue sur la tension de départ de l'intégration. C'est cette inconnue que l'on appelle le bruit de réinitialisation.

Dans ce cas une fluctuation quadratique de la tension aux bornes de la capacité d'intégration peut être estimée par l'expression suivante :

$$\overline{v_b^2} = \frac{k_B \cdot T}{Cint}$$

avec kB constante de Boltzman, T la température, et Cint valeur de la capacité d'intégration.

Ce bruit de réinitialisation peut devenir un facteur limitant des performances de l'imageur. On cherche donc à le réduire au maximum.

Un premier mode de réinitialisation de type appelé « hard reset » ou réinitialisation dure consiste à polariser le transistor interrupteur 6 en régime linéaire de sorte qu'il se comporte comme un interrupteur fermé. Une tension de réinitialisation $V_{reset}$ telle que $V_{reset} <$ VDD - Vt (avec VDD un potentiel d'alimentation haut et Vt la tension de seuil du transistor 6) est appliquée au drain du transistor de réinitialisation, tandis que l'on fixe sa grille au potentiel d'alimentation VDD. On cherche ainsi à placer la capacité d'intégration Cint à la tension de réinitialisation $V_{reset}$.

Un deuxième mode de réinitialisation appelé « soft reset » est utilisé dans les imageurs fonctionnant dans le domaine du visible. Dans ce cas, le transistor 6 est polarisé en régime de saturation avec son drain et sa grille mis au potentiel d'alimentation haut VDD et le courant qui le traverse est faible. Le transistor 6 est alors en mode de faible inversion.

On connecte le drain et la grille du transistor 6 à une tension d'alimentation VDD, et la capacité Cint vient se polariser en fin de réinitialisation à une tension VDD-Vgs, avec vgs la tension grille source du transistor.

Une réduction du bruit quadratique d'un facteur 2 peut être obtenue dans le deuxième mode de réinitialisation (soft reset) : $\overline{v_b^2} = \dfrac{k_B.T}{2.C}$ On peut chercher à vouloir réduire davantage ce bruit pour certaines applications.

Le document « Low noise readout using Active reset for CMOS APS", Boyd Fowler, Michael D. Godfrey, Janusz Balicki, and John Canfield. Pixel Devices International Inc. Proceedings of SPIE, the international society for optical engineering, May 2000, présente une technique alternative de réinitialisation dite de réinitialisation active (« active reset ») permettant de réduire davantage le bruit de réinitialisation.

Cette méthode, est appliquée dans cet article à un imageur fonctionnant dans le domaine du visible. Elle utilise un amplificateur qui sert d'élément actif et qui permet d'effectuer une mesure précise du bruit et de rétroagir sur le transistor de réinitialisation par l'intermédiaire d'une boucle de contre-réaction. Dans ce cas, selon l'article, le bruit quadratique peut être réduit en théorie d'un facteur A, A étant le gain de l'étage amplificateur.

$$\overline{v_b^2} = \frac{k_B.T}{A.C}$$

Il se pose le problème de réaliser un imageur avec un bruit quadratique réduit lors de la phase de réinitialisation tout en conservant une impédance d'entrée faible lors des phases de lecture.

## EXPOSÉ DE L'INVENTION

Un but de l'invention est de mettre en oeuvre un dispositif imageur dans lequel chaque élément de détection est pourvu d'un circuit de lecture muni à la fois d'un étage de polarisation à injection directe à contre réaction (BDI) et d'un étage de réinitialisation active.

Ainsi, selon un aspect la présente invention concerne un dispositif imageur comportant une pluralité d'éléments de détection chaque élément de détection étant formé d'un photo-détecteur associé et connecté à un circuit de lecture d'un signal généré par le photo-détecteur, le circuit de lecture étant doté d'une capacité d'intégration pour stocker des charges provenant du photo-détecteur, le circuit de lecture comprenant en outre:

- un étage de réinitialisation active de la capacité d'intégration doté de transistors formant un premier amplificateur de courant d'une première source de courant,

- un étage de polarisation à injection directe à contre-réaction du photo-détecteur doté de transistors formant un deuxième amplificateur de courant d'une deuxième source de courant,

- un circuit de commutation comprenant un étage de couplage intégré au circuit de lecture, le circuit de commutation étant commandé par des signaux de contrôle et étant configuré pour :

- lors d'une phase de réinitialisation de la capacité d'intégration correspondant à un premier état desdits signaux de contrôle : coupler ladite première source de courant à la capacité d'intégration et activer le premier amplificateur de courant tout en découplant ladite deuxième source de courant du photo-détecteur et en désactivant le deuxième amplificateur,

- lors d'une phase d'intégration d'un courant issu de la photodiode et correspondant à un deuxième état desdits signaux de contrôle, coupler ladite deuxième source de courant au photo-détecteur et activer le deuxième amplificateur de courant tout en découplant ladite première source de courant de la capacité d'intégration et en désactivant le premier amplificateur.

Un tel dispositif permet d'obtenir une résistance d'entrée faible et par conséquent un rendement d'injection important tout en ayant un bruit de quadratique de réinitialisation faible.

Avantageusement, la première source de courant et la deuxième source de courant sont une même source de courant qui est commune au premier amplificateur et au deuxième amplificateur de courant. Ceci peut notamment permettre un gain en termes d'encombrement du circuit de lecture.

Selon une possibilité de mise en oeuvre, le premier amplificateur et le deuxième amplificateur peuvent être formés d'un transistor montés en source de courant et respectivement d'un premier transistor d'amplification et d'un deuxième transistor d'amplification, le circuit de de commutation étant configuré en outre pour :

- lors de ladite phase de réinitialisation, coupler la source de courant commune à la capacité d'intégration tout en isolant le photo-détecteur de ladite source de courant commune,

- lors de ladite phase d'intégration, coupler la source courant commune à la photodiode tout en isolant la capacité d'intégration de ladite source de courant commune. Ceci peut notamment permettre de réduire la consommation en courant nécessaire pour effectuer les différentes phases de fonctionnement.

Selon une possibilité de mise en oeuvre, le transistor monté en source de courant reçoit sur sa grille une tension de polarisation $v_{bias}$ modulable entre ladite phase de réinitialisation et ladite phase d'intégration, de sorte que lors de ladite phase de réinitialisation, la tension de polarisation $v_{bias}$ a une première valeur de manière à ce que la source de courant commune produise un premier courant $I_1$, et de sorte que lors de la phase d'intégration, la tension de polarisation a une deuxième valeur, de manière à ce que la source de courant commune produise un deuxième courant $I_2$ différent dudit premier courant.

L'étage de couplage précité peut être formé d'un premier transistor de couplage et d'un deuxième transistor de couplage. Parmi les signaux de contrôle figure un premier signal de commande $vc_1$ de couplage appliqué sur une grille du premier transistor de couplage et un deuxième signal $vc_2$ de commande de couplage appliqué sur une grille du deuxième transistor de couplage.

Avantageusement, le circuit de commutation peut être formé en outre d'un premier élément interrupteur et d'un deuxième élément interrupteur appartenant à un bloc de polarisation externe au circuit de lecture.

Le premier élément interrupteur peut être configuré pour alternativement, coupler lors de la phase d'intégration, une électrode d'un transistor d'amplification du premier amplificateur à un élément de circuit mis à un premier potentiel de polarisation VBDI et découpler lors de ladite phase de réinitialisation ledit élément de circuit de ladite électrode dudit transistor dudit premier amplificateur.

Le deuxième élément interrupteur peut être configuré pour alternativement, découpler lors de ladite phase d'intégration, une électrode d'un transistor d'amplification du deuxième amplificateur à une portion de circuit mise à un deuxième potentiel Vref de polarisation et coupler lors de ladite phase de réinitialisation, l'électrode dudit transistor d'amplification dudit deuxième amplificateur de ladite portion de circuit.

Selon une possibilité de mise en oeuvre, l'étage de réinitialisation active de la capacité d'intégration $C_{int}$ est doté d'un transistor de réinitialisation ayant une électrode mise à un potentiel de réinitialisation et couplé à la capacité d'intégration, le premier transistor de couplage étant agencé entre une grille du transistor de réinitialisation et ledit premier amplificateur.

Selon une possibilité de mise en oeuvre, l'étage de polarisation à injection directe à contre-réaction comprend un transistor dit d'injection directe agencé entre le photo-détecteur et la capacité capacitive d'intégration, le deuxième transistor de couplage étant agencé entre une grille du transistor d'injection directe et ledit deuxième amplificateur. Avantageusement, le premier amplificateur de courant peut être constitué de deux transistors ayant une électrode commune.

Avantageusement, le deuxième amplificateur de courant peut être constitué uniquement de deux transistors ayant une électrode commune.

Selon un aspect particulier, l'invention concerne un imageur infrarouge comprenant un dispositif imageur tel que défini plus haut.

## BRÈVE DESCRIPTION DES DESSINS

La présente invention sera mieux comprise sur la base de la description qui va suivre et des dessins en annexe sur lesquels :

Figure 1 sert à illustrer, dans un imageur infrarouge, un exemple de pixel de lecture avec une structure de polarisation de type BDI (pour « Buffered Direct Injection ») de la photodiode°;
Figure 2 sert à illustrer un premier mode de réinitialisation d'un pixel de lecture d'un imageur°;
Figure 3 sert à illustrer un deuxième mode de réinitialisation d'un pixel de lecture d'un imageur°;
Figure 4 sert à illustrer un exemple particulier de pixel de lecture d'imageur tel que mis en oeuvre suivant l'invention et permettant de réaliser une réinitialisation active ainsi qu'une polarisation de type à injection directe à contre-réaction (BDI)°;
Figure 5A sert à illustrer une première configuration du pixel de lecture pour mettre en oeuvre une réinitialisation active lors d'une phase de réinitialisation d'une capacité d'intégration°;
Figure 5B sert à illustrer une deuxième configuration du circuit de lecture lors d'une phase d'intégration de courant par la capacité d'intégration pour mettre en oeuvre une polarisation de type à injection directe à contre-réaction°;
Figure 6 sert à illustrer une variante de réalisation d'un pixel de lecture avec deux sources de courant distinctes°;
Figure 7 sert à illustrer une variante d'agencement du circuit de lecture adaptée à une connexion de ce dernier sur une zone P d'une photodiode de type P sur N°;
Figure 8 sert à illustrer une autre variante d'agencement du circuit de lecture adaptée à une connexion de ce dernier sur une zone P d'une photodiode de type P sur N, le circuit de lecture étant muni cette fois de transistors de couplage de type NMOS°;
Figure 9 sert à illustrer une autre variante d'agencement du circuit de lecture adaptée à une structure dans laquelle le circuit de lecture et la photodiode sont co-intégrés dans un même pixel et réalisés sur un même substrat°;
Figure 10 sert à illustrer une variante de réalisation du pixel de lecture avec deux sources de courant distinctes et qui fonctionnent alternativement suivant que l'on se trouve dans une phase de réinitialisation ou une phase d'intégration de courant°;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

**EXPOSÉ DÉTAILLÉ DE MODES DE RÉALISATION PARTICULIERS**

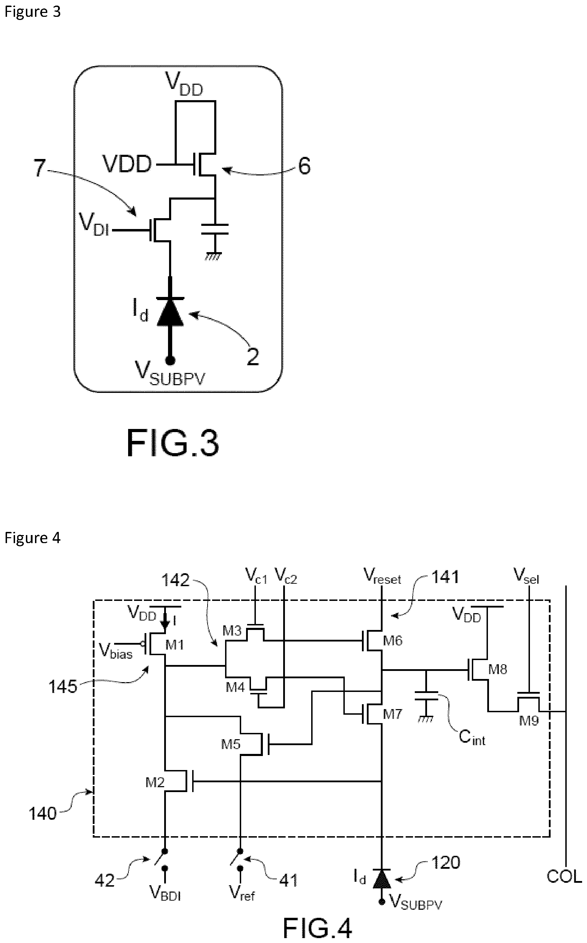

On se réfère à présent à la figure 4 donnant un exemple de circuit de lecture 140 d'un imageur tel que mis en oeuvre suivant un mode de réalisation de la présente invention. L'imageur est, dans cet exemple, un imageur infrarouge.

Le circuit de lecture 140, également appelé « pixel de lecture » ou « pixel », est connecté à un photodétecteur tel qu'une photodiode 120. La photodiode 120 transforme ici un rayonnement IR en un courant électrique. Le circuit de lecture 140 associé à la photodiode 120 forment un élément de détection. L'imageur compte généralement une pluralité d'éléments de détection typiquement agencés en matrice.

La photodiode 120 est dans cet exemple polarisée en inverse et délivre au circuit de lecture 140 un courant représentatif d'une scène observée. La photodiode 120 peut être rapportée sur le circuit de lecture 140 selon un assemblage que l'on nomme couramment « hybridation ». Le circuit de lecture 140 et la photodiode 120 sont dans ce cas reliés mécaniquement et électriquement par le biais d'élément conducteurs tels que par exemple des billes métalliques.

Pour polariser la photodiode 120, on applique à une de ses bornes un potentiel Vsubpv, tandis que l'autre borne est couplée à une première partie 141 du circuit de lecture 140, sous forme d'un circuit à transistor(s).

Dans cet exemple de réalisation particulier, cette première partie 141 du circuit de lecture 140 est formée de transistors $M_1$, $M_2$, $M_3$, $M_4$, $M_5$, $M_6$, $M_7$, typiquement de type MOS et d'une capacité d'intégration $C_{int}$. Cette capacité d'intégration $C_{int}$ peut être elle-même formée d'un transistor dont la source et le drain sont en court-circuit.

La première partie 141 du circuit de lecture 140 est pourvue d'un étage de réinitialisation active pour permettre de réinitialiser la capacité d'intégration $C_{int}$ à un potentiel donné une fois qu'une phase d'intégration du courant de la photodiode 120 est achevée. L'étage de réinitialisation active est doté d'un transistor de réinitialisation $M_6$, comportant une électrode, dans cet exemple le drain, reliée à un potentiel de polarisation $V_{reset}$ et une autre électrode, dans cet exemple la source, reliée à la capacité d'intégration $C_{int}$. L'étage de réinitialisation a ici pour particularité d'être doté d'un amplificateur de courant appelé « premier amplificateur de courant » dont la sortie est susceptible d'être couplée au transistor de réinitialisation $M_6$ et d'agir sur ce transistor $M_6$, en particulier sur sa grille, tandis qu'une entrée du premier amplificateur est reliée au transistor de réinitialisation $M_6$ de sorte à former une contre-réaction.

Un tel agencement permet d'effectuer une mesure précise de bruit et de diminuer le bruit quadratique aux bornes de la capacité d'intégration $C_{int}$. L'étage de réinitialisation active est ici pourvu de transistors $M_1$, $M_5$

aptes à former cet amplificateur de courant. Dans l'exemple de réalisation particulier illustré, un transistor $M_1$, monté en source de courant et un transistor $M_5$ dit d'amplification monté en source commune avec le transistor $M_1$ forment le premier amplificateur. Ainsi, de manière avantageuse, ce premier amplificateur de courant peut être constitué uniquement de deux transistors $M_1$, $M_5$, ayant une électrode commune, ce qui participe à l'obtention d'un circuit de lecture compact.

Le circuit de lecture 140 est également muni d'un étage de polarisation à injection directe contre-réactionnée (BDI) de la photodiode 120. L'étage de polarisation à injection directe contre-réactionnée est doté d'un transistor d'injection directe $M_7$, avec une électrode reliée à la capacité d'intégration $C_{int}$ et une autre électrode reliée à la photodiode 120.

Le transistor d'injection directe $M_7$ monté en cascode avec la photodiode 120 permet de maintenir une polarisation fixe sur la photodiode 120 lors d'une phase d'intégration du courant de photodiode 120 par la capacité d'intégration Cint. Cela permet facilement d'isoler la photodiode 120 des variations de tension aux bornes de la capacité de stockage sans rajouter un nombre important de transistors.

La polarisation de la photodiode 120 mise en oeuvre lors de la phase d'intégration est ici plus particulièrement effectuée par le biais d'une injection directe à contre-réaction (BDI) permettant d'obtenir une faible impédance d'entrée Rin du circuit de lecture 140 et d'obtenir un rendement d'injection (en 1/Rin) amélioré. On s'appuie ici sur un amplificateur de courant appelé deuxième amplificateur de courant et formé de transistors $M_1$, $M_2$. Le deuxième amplificateur $M_1$-$M_2$ de courant a une sortie susceptible d'être couplée avec le transistor d'injection directe $M_7$ et d'agir sur ce transistor $M_7$, tandis qu'une entrée du deuxième amplificateur est reliée au transistor d'injection directe $M_7$ de sorte à former une contre-réaction. Dans l'exemple de réalisation particulier illustré un transistor $M_1$, monté en source de courant et un transistor $M_2$ dit d'amplification monté en source commune avec le transistor $M_1$ forment le deuxième amplificateur. Ainsi, de manière avantageuse, ce deuxième amplificateur de courant peut être constitué uniquement de deux transistors $M_1$, $M_2$ ayant une électrode commune. Cela participe également à l'obtention d'un circuit de lecture compact.

Dans l'exemple de réalisation particulier illustré sur la figure 4, le circuit de lecture 140 comprend, de manière avantageuse, une portion de circuit formant une source de courant qui a ici la particularité d'être commune au premier amplificateur M1-M5 de courant et au deuxième amplificateur M1-M2 de courant.

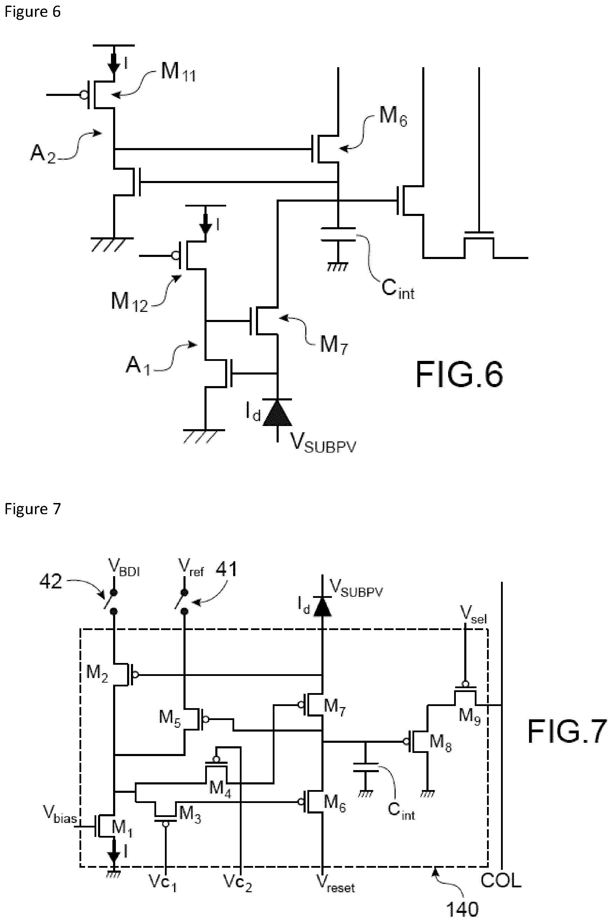

Le premier amplificateur et le deuxième amplificateur partagent ainsi un même transistor $M_1$ monté en source de courant ce qui permet notamment un gain de place par rapport à un autre agencement tel qu'illustré sur la figure 6, où les amplificateurs A1, A2 de courant utilisent deux sources de courant distinctes mises en oeuvre à partir de deux transistors $M_{11}$, $M_{12}$ montés en

source de courant. Outre le gain de place, le mode de réalisation illustré sur la figure 4 est plus avantageux que celui de la figure 6 du point de vue de la consommation. On remplace en effet deux sources de courant, avec une consommation simultanée de deux courants, par une seule source de courant. Cela s'avère particulièrement avantageux, notamment dans le cas de certaines applications pour lesquelles on fait fonctionner le pixel à température cryogénique et où toute dissipation thermique supplémentaire entraîne un coût énergétique important pour le système de refroidissement.

Le courant délivré par la source de courant est typiquement réglé par le biais d'une tension de polarisation vbias appliquée sur la grille du transistor $M_1$, et qui est susceptible de varier en fonction des différentes phases de fonctionnement du circuit de lecture. La tension de polarisation vbias peut être placée à une valeur lors de la phase de réinitialisation et à une autre valeur lors de la phase d'intégration, de sorte que la source de courant produit un premier courant lors de la phase de réinitialisation, la source de courant produit un deuxième courant différent de celui généré lors de la phase de réinitialisation.

Pour permettre la mutualisation d'un étage de réinitialisation à réinitialisation active et une polarisation à injection directe contre-réactionnée (BDI) on prévoit un système de commutation entre les étages de réinitialisation et de polarisation. Ainsi, le dispositif imageur a ici également pour particularité d'être doté en outre d'un circuit de commutation susceptible d'adopter, en fonction d'états respectifs de signaux de contrôle de ce circuit, différentes configurations en fonction des différentes phases de fonctionnement du circuit de lecture, et en particulier entre une phase d'intégration du courant de la photodiode 120 et une phase de réinitialisation de la capacité d'intégration $C_{int}$.

Le circuit de commutation est pourvu d'un étage 142 de couplage intégré au circuit de lecture 140 et formé d'un premier transistor de couplage $M_3$ et d'un deuxième transistor $M_4$ de couplage, dont les états respectifs, parmi un état passant et un état bloqué, sont commandés respectivement par le biais d'un premier signal de commande Vc1 de couplage et d'un deuxième signal de commande Vc2 de couplage. Les signaux de commande Vc1, Vc2 de couplage sont ici appliqués respectivement sur la grille du premier transistor de couplage $M_3$ et sur la grille du deuxième transistor $M_4$ de couplage. L'étage de commutation est susceptible d'adopter différentes configurations tandis que les signaux de commande Vc1, Vc2 associés peuvent adopter différents états d'une phase à l'autre de fonctionnement du circuit de lecture.

Outre l'étage de commutation formé des transistors $M_3$, $M_4$, le circuit de commutation est, dans cet exemple de réalisation, doté également d'un premier élément interrupteur 41 et d'un deuxième élément interrupteur 42 appartenant cette fois à un bloc de polarisation externe au circuit de lecture 140.

Le bloc de polarisation externe peut être un circuit situé en bord de la matrice d'éléments de détection et donc situé à l'extérieur de cette matrice. Le bloc de polarisation externe peut être configuré pour appliquer des signaux de polarisation aux circuits de lecture 140 respectifs et en particulier aux étages 141 à transistors respectifs de plusieurs éléments de détection 130.

Le premier élément interrupteur 41 est configuré pour alternativement coupler, lors de la phase d'intégration, une électrode du transistor M5 à un potentiel de polarisation Vref et à découpler, lors d'une phase de réinitialisation, l'électrode du transistor M5 du potentiel de polarisation Vref.

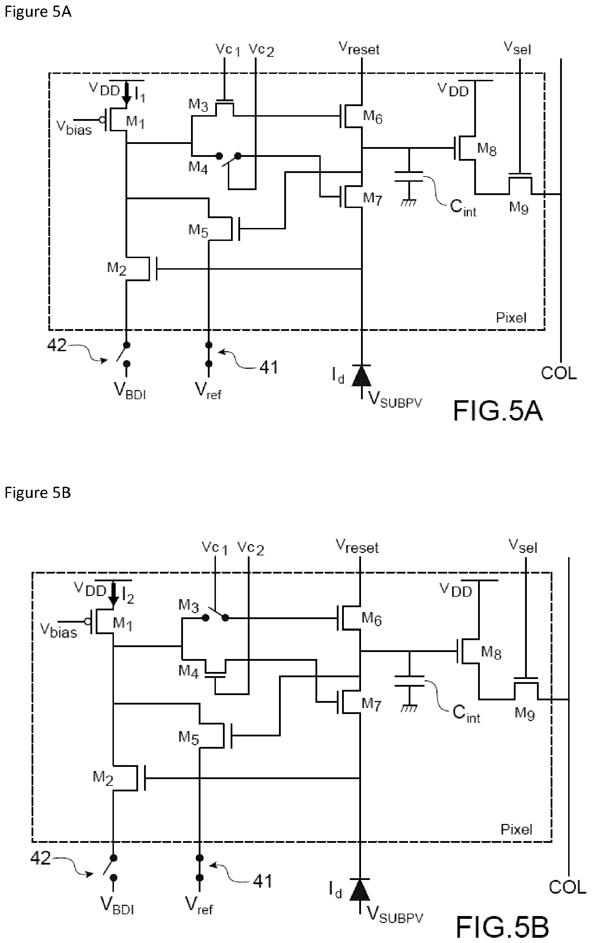

Le deuxième élément interrupteur 42 est quant à lui configuré pour alternativement découpler, lors de la phase d'intégration, une électrode du transistor M2 du deuxième amplificateur un potentiel de polarisation VBDI et coupler lors d'une phase de réinitialisation, cette même électrode du transistor M2 au potentiel de polarisation VBDI. Sur la figure 5A, le circuit de lecture 140 se trouve dans une configuration de réinitialisation, correspondant à un premier état des signaux de contrôle du circuit de commutation. Parmi ces signaux de contrôle, les signaux $vc_1$, $vc_2$ de commande de couplage respectifs des transistors de couplage $M_3$, $M_4$ sont prévus respectivement de sorte à mettre le premier transistor de couplage $M_3$ dans un état passant et à mettre le deuxième transistor de couplage $M_4$ dans un état bloqué. Les interrupteurs 41, 42 sont, quant à eux, respectivement mis dans un état fermé (i.e passant) et dans un état ouvert (i.e. non passant).

Un premier courant I1 est généré et amplifié par le premier amplificateur M1-M5 et cet amplificateur est couplé au transistor de réinitialisation M6. L'étage formé des transistors M1, M2 et M6 fonctionne comme un étage de réinitialisation active (« active reset »). Les états respectifs du transistor M3 et de l'interrupteur 41 sont tels que lors de la phase de réinitialisation la source de courant formée par le transistor M1 est couplée au transistor de réinitialisation M6 lui-même couplé à la capacité d'intégration $C_{int}$ et le premier amplificateur de courant M1-M5 est activé.

Les états respectifs du transistor M4 et de l'interrupteur 42 sont tels que la source de courant est découplée de la photo-diode 120 et que le deuxième amplificateur est désactivé.

Lors de cette phase de réinitialisation, la photodiode 120 est polarisée par une structure de polarisation de type DI (pour « Direct Injection ») par l'intermédiaire du transistor $M_7$ d'injection directe. La capacité sur la grille de ce transistor $M_7$ permet de conserver la tension obtenue lors d'une phase d'intégration précédente où la photodiode 120 était alors polarisée dans un mode de polarisation de type BDI. La tension obtenue en fin de réinitialisation sur la capacité d'intégration $C_{int}$ peut être réglée par l'intermédiaire de la connexion de l'interrupteur 41 à la tension de polarisation $V_{ref}$ appliquée sur une électrode du transistor $M_5$ d'amplification, ici sa source.

La tension de polarisation $V_{ref}$ permet de régler la tension de réinitialisation. Selon un mode de réalisation particulier, au lieu d'appliquer une tension de polarisation $V_{ref}$ fixe lors de phase de réinitialisation, la tension $V_{ref}$ peut être amenée à varier durant la phase de réinitialisation et être appliquée sous forme d'une rampe de tension, selon une variation qui peut croître ou décroître de manière linéaire.

Dans certains cas, la phase de réinitialisation peut comprendre la mise en oeuvre préalable d'une étape de réinitialisation dite « dure » (également appelée « hard reset » selon la terminologie anglo-saxonne) telle que décrite précédemment en lien avec la figure 2, afin d'éliminer une éventuelle rémanence d'une image à une autre. Ainsi l'étage de réinitialisation réalisé permet de procéder aussi bien à une réinitialisation active qu'à une réinitialisation de type « hard reset ».

Pour réaliser une telle réinitialisation « hard reset », les transistors de couplage $M_3$, $M_4$ sont commandés de la même manière que pour une réinitialisation active telle qu'évoquée précédemment. Ainsi, lors de l'étape de réinitialisation « hard reset » le premier transistor de couplage $M_3$ est activé (passant) et le deuxième transistor de couplage $M_4$ désactivé (bloqué).

La tension Vbias qui, dans un mode de fonctionnement normal, permet de régler la valeur du courant dans l'amplificateur, est cette fois mise à une autre valeur, de sorte à polariser le transistor $M_6$ de réinitialisation en régime linéaire. Dans cet exemple, la grille du transistor $M_6$ de réinitialisation est plus particulièrement mise à un potentiel supérieur à la somme $Vt+V_{reset}$ de la tension de réinitialisation $V_{reset}$ et de la tension de seuil du transistor $M_6$.

En choisissant de manière adéquate la tension de réinitialisation $V_{reset}$ on réalise alors une réinitialisation de type hard reset de la capacité d'intégration. Une fois cette étape effectuée, on peut poursuivre alors une réinitialisation active comme décrite précédemment. Ainsi, lors d'une même phase de réinitialisation, la tension de polarisation vbias est susceptible d'être modifiée et de varier.

Lorsque la phase de réinitialisation achevée, ce qui se traduit par une réinitialisation de la tension de la capacité d'intégration à une valeur souhaitée on peut entamer une phase d'intégration lors de laquelle la variation de tension de la capacité d'intégration $C_{int}$ traduit l'acquisition d'une information de flux lumineux.

Sur la figure 5B, le circuit représenté se trouve dans sa configuration d'intégration, correspondant à des deuxièmes états respectifs des signaux $vc_1$, $vc_2$ de commande des transistors de couplage $M_3$, $M_4$, distinct de celui adopté durant la phase de réinitialisation. Le premier transistor de couplage $M_3$ est alors mis, par le biais du premier signal de commande $vc_1$ appliqué sur sa grille dans un état bloqué, équivalent à un interrupteur ouvert. Le transistor $M_6$ de réinitialisation est ainsi rendu isolé de la source de courant formée par le premier transistor $M_1$.

Le deuxième transistor $M_4$ de couplage est

quant à lui mis, par le biais du deuxième signal de commande $vc_2$ appliqué sur sa grille, dans un état passant lui permettant de relier le transistor $M_7$ à l'amplificateur formé par les transistors $M_1$, $M_2$ afin de réaliser une structure de polarisation de type BDI et obtenir une bonne stabilisation de la tension de photodiode. Un courant $I_2$ délivré par la source de courant réalisée à partir du transistor $M_1$ est cette fois dirigé vers le transistor $M_2$ dont la grille vient fixer la tension de polarisation de la photodiode 120. Le courant $I_2$ nécessaire à l'amplificateur dans la phase d'intégration est typiquement différent de celui requis pour la phase de réinitialisation et est ici modulé par l'intermédiaire de la tension Vbias appliquée sur la grille du transistor $M_1$ formant la source de courant. L'étage de couplage doté des transistors $M_3$, $M_4$ a donc ici une configuration différente de ses interrupteurs afin d'obtenir un montage de polarisation de la photodiode de type BDI.

Les interrupteurs 41, 42 sont également mis dans des états respectifs différents de ceux adoptés lors de la phase de réinitialisation. Lors de la phase d'intégration, les interrupteurs 41, 42 sont quant à eux, respectivement mis dans un état ouvert (i.e. bloqué ou non passant) et dans un état fermé (i.e. passant).

Les états respectifs du transistor M4 et de l'interrupteur 42 sont tels que lors de la phase d'intégration la source de courant formée par le transistor M1 est couplée au transistor M7 lui-même couplé à la photodiode tandis que le deuxième amplificateur de courant M1-M2 est activé.

Les états respectifs du transistor M3 et de l'interrupteur 41 sont tels que la source de courant est découplée de la capacité d'intégration et que le premier amplificateur est désactivé.

Le circuit de lecture 140 est également muni d'un transistor $M_8$ suiveur et d'un transistor $M_9$ de sélection de ligne. Les transistors $M_8$ et $M_9$ sont dans cet exemple également de type N, en particulier NMOS. On peut toutefois prévoir d'associer l'étage 141 à transistors $M_1$, $M_2$, $M_3$, $M_4$, $M_5$, $M_6$, $M_7$ à un autre type de structure en aval de la capacité Cint que celle de l'exemple illustré.

Dans l'exemple de réalisation particulier qui vient d'être décrit en lien avec les figures 4, 5A, 5B, on prévoit un transistor M1 formant la source de courant qui est de type PMOS tandis que les autres transistors du pixel et en particulier les transistors M2, M5, M6, M7 sont de type NMOS.

Une variante de réalisation de l'exemple décrit précédemment est donnée sur la figure 7, et prévoit, à la place d'une photodiode de type N sur P, une photodiode 120 de type P sur N. Dans ce cas, les transistors M2, M3, M4, M5, M6, M7, M8, M9 peuvent être des transistors de type PMOS et le transistor M1 formant la source de courant peut être cette fois de type NMOS.

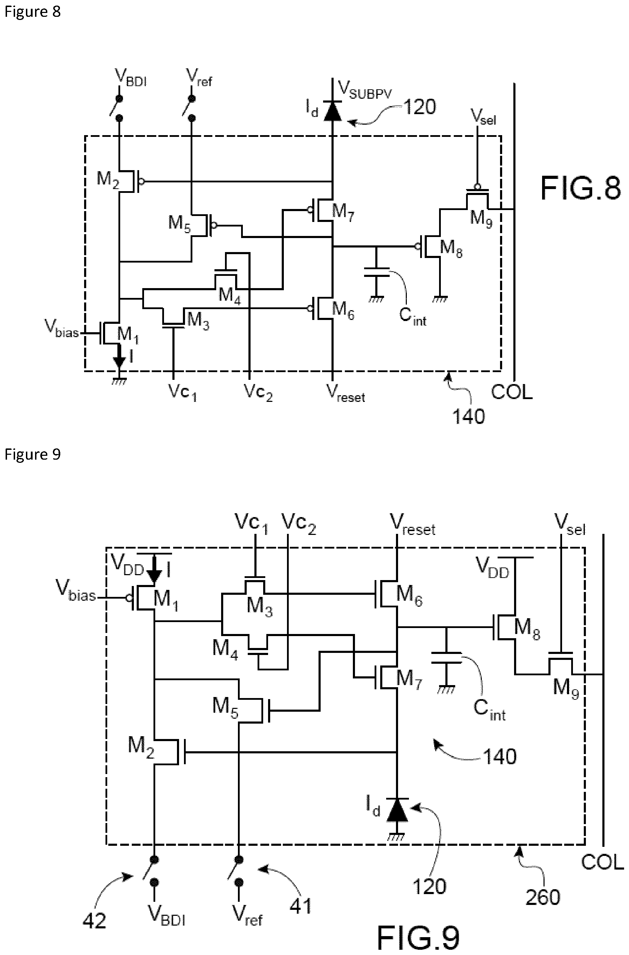

Une autre variante de réalisation illustrée sur la figure 8 diffère de celle illustrée sur la figure 7, en ce que les transistors de couplage M3, M4 sont cette fois de type PMOS, afin de rendre plus aisé leur pilotage par le biais des signaux de commande Vc1, Vc2. Les autres transistors M2, M5, M7, M6 sont de type de conduction opposé à celui du transistor M1 formant la source de courant, par exemple des transistors NMOS.

Les exemples de réalisation décrits précédemment proposés concernent plus particulièrement le cas de photodiodes réalisées sur un substrat spécifique et différent de celui du pixel de lecture, et où la matrice de photodiodes est reliée au circuit de lecture par hybridation. Mais on peut également prévoir un circuit où la photodiode 120 est réalisée dans le pixel, qui contient alors la photodiode et le circuit de lecture.

Ainsi, selon une variante de l'un ou l'autre des exemples de réalisation décrits précédemment où la photodiode est hybridée sur un circuit de lecture, on peut prévoir comme sur la figure 9, une photodiode 120 intégrée dans le pixel 260, la photodiode 120 et les transistors M1, M2, M3, M4, M5, M6, M7, M8, M9 pouvant être alors intégrés dans un même circuit réalisé sur un même substrat.

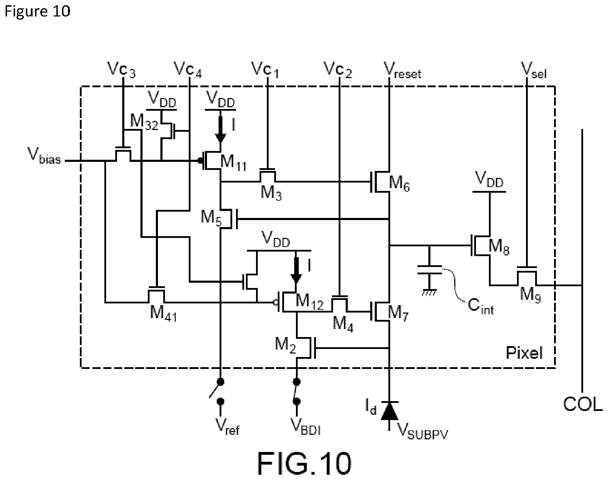

Dans l'un ou l'autre des exemples de réalisation décrits précédemment en lien avec les figures 4, 5A, 5B, 7, 8, on mutualise la source de courant pour réaliser la polarisation par injection directe à contre-réaction (BDI) et pour réaliser la réinitialisation active. Comme indiqué précédemment en lien avec la figure 6, il est également possible dans le cas où les contraintes d'encombrement et de consommation sont moindres, de prévoir un circuit avec deux sources de courant distinctes associées respectivement à l'étage de polarisation par injection directe à contre-réaction (BDI) et à l'étage de réinitialisation. Dans l'exemple de réalisation illustré sur la figure 10, on prévoit une amélioration de ce dispositif à deux sources de courant. Ainsi, pour éviter une consommation simultanée de ces deux sources de courants formée par les transistors M11, M12 dans cet exemple de type PMOS, on prévoit ici de couper le courant dans l'amplificateur non-utilisé. Le circuit de commutation est pourvu d'éléments de commutation supplémentaires, en particulier sous forme de transistors de commutation M31, M42, dont l'état passant ou bloqué est commandé respectivement par le biais d'un signal de commande Vc3 appliqué sur leurs grilles respectives, et de transistors de commutation M32, M41, dont l'état passant ou bloqué est commandé respectivement par le biais d'un autre signal de commande Vc4 appliqué sur leurs grilles respectives.

Un premier transistor de commutation M31 est doté d'une électrode recevant la tension de polarisation Vbias et d'une autre électrode couplée au transistor M11 formant une première source de courant. Un deuxième transistor de commutation M41 est doté d'une électrode recevant la tension de polarisation Vbias et d'une autre électrode couplée au transistor M12 formant une deuxième source de courant.

Un troisième transistor de commutation M32 est doté d'une électrode à une tension d'alimentation et d'une autre électrode couplée au transistor M11 formant une première source de courant.

Un quatrième transistor de commutation M42 comporte une électrode recevant la tension d'alimentation et une autre électrode couplée au transistor M12 formant une deuxième source de courant.

La tension d'alimentation peut être prévue haute VDD ou basse GND en fonction du type N ou P, des transistors M11, M12 formant les sources de courant.

Dans l'exemple de réalisation particulier illustré où le troisième transistor de commutation M32 et le quatrième transistor de commutation M42 sont de type PMOS, la tension d'alimentation est une tension haute VDD, par exemple 3,3Volts.

Durant une phase de réinitialisation, l'état du signal de commande $vc_3$, est tel que le premier transistor de commutation M31 et le quatrième transistor de commutation M42 sont rendus passants. Ainsi, respectivement, on couple le transistor M11 source de courant à la tension de polarisation Vbias et on couple la tension d'alimentation à l'autre transistor M12 source de courant.

L'état du signal de commande $vc_4$, est tel que le troisième transistor de commutation M32 est rendu bloqué et le quatrième transistor de commutation M42 est également rendu bloqué. Ainsi, la première source de courant fonctionne tandis que la deuxième source de courant est désactivée et isolée d'une portion de circuit délivrant la tension de polarisation Vbias.

Durant une phase d'intégration, l'état respectif des signaux de commande de commande $vc_3$, $vc4$ est inversé par rapport à celui de la phase de réinitialisation. La première source de courant est alors désactivée et isolée d'une portion de circuit délivrant la tension de polarisation Vbias, tandis que la deuxième source de courant fonctionne.

**Revendications**

1. Dispositif imageur comportant une pluralité d'éléments de détection chaque élément de détection étant formé d'un photo-détecteur (120) associé et connecté à un circuit de lecture (140) d'un signal généré par le photo-détecteur (120), le circuit de lecture (140) étant doté d'une capacité d'intégration ($C_{int}$) pour stocker des charges provenant du photo-détecteur (120), le circuit de lecture (140) comprenant en outre:

   - un étage de réinitialisation active de la capacité d'intégration doté de transistors (M1, M5) formant un premier amplificateur de courant d'une première source de courant (145),
   - un étage de polarisation à injection directe contre-réactionnée (BDI) du photo-détecteur (120) doté de transistors (M1, M2) formant un deuxième amplificateur de courant d'une deuxième source de courant (145),
   - un circuit de commutation (142, 41, 42) comprenant un étage (142) de couplage intégré au circuit de lecture (140), le circuit de commutation étant commandé par des signaux (vcl, vc2) de contrôle et étant configuré pour :

- lors d'une phase de réinitialisation de la capacité d'intégration ($C_{int}$) correspondant à un premier état desdits signaux de contrôle (vcl, vc2) : coupler ladite première source de courant à la capacité d'intégration ($C_{int}$) et activer le premier amplificateur de courant tout en découplant ladite deuxième source de courant du photo-détecteur et en désactivant le deuxième amplificateur,
- lors d'une phase d'intégration ($C_{int}$) d'un courant issu de la photodiode et correspondant à un deuxième état desdits signaux de contrôle (vcl, vc2), coupler ladite deuxième source de courant au photo-détecteur et activer le deuxième amplificateur de courant tout en découplant ladite première source de courant de la capacité d'intégration et en désactivant le premier amplificateur.

2. Dispositif imageur selon la revendication 1, dans lequel la première source de courant et la deuxième source de courant sont une même source de courant commune au premier amplificateur (M1-M2) et au deuxième amplificateur (M1-M5) de courant.

3. Dispositif imageur selon la revendication 2, dans lequel le premier amplificateur et le deuxième amplificateur sont formés d'un transistor (M1) monté en source de courant et respectivement d'un premier transistor (M2) d'amplification et d'un deuxième transistor (M5) d'amplification, le circuit de de commutation étant configuré en outre pour :

    - lors de ladite phase de réinitialisation, coupler la source de courant commune à la capacité d'intégration ($C_{int}$) tout en isolant le photo-détecteur de ladite source de courant commune,
    - lors de ladite phase d'intégration ($C_{int}$), coupler la source courant commune à la photodiode tout en isolant la capacité d'intégration de ladite source de courant commune.

4. Dispositif imageur selon la revendication 3, dans lequel le transistor (M1) monté en source de courant reçoit sur sa grille une tension de polarisation ($v_{bias}$) modulable entre ladite phase de réinitialisation et ladite phase d'intégration, de sorte que lors de ladite phase de réinitialisation, la tension de polarisation ($v_{bias}$) a une première valeur de manière à ce que la source de courant commune produise un premier courant ($I_1$), et de sorte que lors de la phase d'intégration, la tension de polarisation a une deuxième valeur, de manière à ce que la source de courant commune produise un deuxième courant ($I_2$) différent dudit premier courant.

5. Dispositif imageur selon l'une des revendications 1 à 4, dans lequel l'étage de couplage est formé d'un premier transistor de couplage ($M_3$) et dans lequel l'étage de couplage est formé d'un deuxième transistor de couplage ($M_4$), et dans lequel parmi les signaux de contrôle figure un premier signal de commande ($vc_1$) de couplage appliqué sur une grille du premier transistor de couplage ($M_3$) et un deuxième signal ($vc_2$) de commande de couplage appliqué sur une grille du deuxième transistor de couplage ($M_4$).

6. Dispositif imageur selon la revendication 5, dans lequel le circuit de commutation est formé en outre d'un premier élément interrupteur (41) et d'un deuxième élément interrupteur (42) appartenant à un bloc de polarisation externe au circuit de lecture (140), le premier élément interrupteur (41) étant configuré pour alternativement, coupler lors de la phase d'intégration, une électrode d'un transistor d'amplification (M2) du premier amplificateur à un élément de circuit mis à un premier potentiel de polarisation (VBDI) et découpler lors de ladite phase de réinitialisation ledit élément de circuit de ladite électrode dudit transistor dudit premier amplificateur, le deuxième élément interrupteur (42) étant configuré pour alternativement, découpler lors de ladite phase d'intégration, une électrode d'un transistor d'amplification du deuxième amplificateur à une portion de circuit mise à un deuxième potentiel ($V_{ref}$) de polarisation et coupler lors de ladite phase de réinitialisation, l'électrode dudit transistor (M5) d'amplification dudit deuxième amplificateur de ladite portion de circuit.

7. Dispositif imageur selon l'une revendications 5 ou 6, dans lequel l'étage de réinitialisation active de la capacité d'intégration ($C_{int}$) est doté d'un transistor de réinitialisation ($M_6$) ayant une électrode mise à un potentiel de réinitialisation (Vreset) et couplé à la capacité d'intégration ($C_{int}$), le premier transistor de couplage ($M_3$) étant agencé entre une grille du transistor de réinitialisation ($M_6$) et ledit premier amplificateur.

8. Dispositif imageur selon l'une des revendications 5 à 7, dans lequel l'étage de polarisation à injection directe contre-réactionnée comprend un transistor ($M_7$) dit d'injection directe agencé entre le photo-détecteur (120) et la capacité d'intégration ($C_{int}$), le deuxième transistor de couplage ($M_4$) étant agencé entre une grille du transistor d'injection directe ($M_7$) et ledit deuxième amplificateur.

9. Dispositif imageur selon l'une des revendications 1 à 8, dans lequel le premier amplificateur ($M_1$-$M_2$) de courant est constitué de deux transistors ayant une électrode commune et/ou dans lequel le deuxième amplificateur ($M_1$-$M_5$) de courant est constitué de deux transistors ayant une électrode commune.

10. Imageur infrarouge comprenant un dispositif selon l'une des revendications 1 à 9.

**Patentansprüche**

1. Bildgebungsvorrichtung, die eine Vielzahl von Detektionselementen umfasst, wobei jedes Detektionselement aus einem Fotodetektor (120) gebildet ist, der einer Ausleseschaltung (140) eines vom Fotodetektor (120) erzeugten Signals zugeordnet und mit dieser verbunden ist, wobei die Ausleseschaltung (140) mit einem Integrationskondensator ($C_{int}$) ausgestattet ist, um Ladungen vom Fotodetektor (120) zu speichern, wobei die Ausleseschaltung (140) ferner Folgendes umfasst:

  - eine aktive Rücksetzstufe des Integrationskondensators, die mit Transistoren (M1, M5) ausgestattet ist, die einen ersten Stromverstärker einer ersten Stromquelle (145) bilden,
  - eine gepufferte Direktinjektions-Vorspannungsstufe (BDI) des Fotodetektors (120), die mit Transistoren (M1, M2) ausgestattet ist, die einen zweiten Stromverstärker einer zweiten Stromquelle (145) bilden,
  - einen Schaltkreis (142, 41, 42), der eine in die Ausleseschaltung (140) integrierte Kopplungsstufe (142) umfasst, wobei der Schaltkreis durch Steuersignale (vcl, vc2) gesteuert wird und für Folgendes konfiguriert ist:
  - während einer Rücksetzphase des Integrationskondensators ($C_{int}$), die einem ersten Zustand der Steuersignale (vcl, vc2) entspricht: Koppeln der ersten Stromquelle mit dem Integrationskondensator ($C_{int}$) und Aktivieren des ersten Stromverstärkers, während die zweite Stromquelle vom Fotodetektor abgekoppelt und der zweite Verstärker deaktiviert wird,
  - während einer Phase der Integration ($C_{int}$) eines Stroms von der Fotodiode, die einem zweiten Zustand der Steuersignale (vcl, vc2) entspricht: Koppeln der zweiten Stromquelle mit dem Fotodetektor und Aktivieren des zweiten Stromverstärkers, während die erste Stromquelle vom Integrationskondensator abgekoppelt und der erste Verstärker deaktiviert wird.

2. Bildgebungsvorrichtung nach Anspruch 1, wobei die erste Stromquelle und die zweite Stromquelle die gleiche Stromquelle sind, die dem ersten Verstärker (M1-M2) und dem zweiten Stromverstärker (M1-M5) gemeinsam ist.

3. Bildgebungsvorrichtung nach Anspruch 2, wobei der erste Verstärker und der zweite Verstärker aus einem als Stromquelle montierten Transistor (M1) und jeweils aus einem ersten Verstärkungstransistor (M2) und einem zweiten Verstärkungstransistor (M5) gebildet sind, wobei der Schaltkreis ferner für Folgendes konfiguriert ist:

  - während der Rücksetzphase, Koppeln der gemeinsamen Stromquelle mit dem Integrationskondensator ($C_{int}$), während der Fotodetektor von der gemeinsamen Stromquelle isoliert wird,
  - während der Integrationsphase ($C_{int}$), Koppeln der gemeinsamen Stromquelle mit der Fotodiode, während der Integrationskondensator von der gemeinsamen Stromquelle isoliert wird.

4. Bildgebungsvorrichtung nach Anspruch 3, wobei der als Stromquelle montierte Transistor (M1) an seinem Gate eine modulierbare Vorspannung ($v_{bias}$) zwischen der Rücksetzphase und der Integrationsphase empfängt, so dass die Vorspannung ($v_{bias}$) während der Rücksetzphase einen ersten Wert hat, so dass die gemeinsame Stromquelle einen ersten Strom ($I_1$) erzeugt, und die Vorspannung während der Integrationsphase einen zweiten Wert hat, so dass die gemeinsame Stromquelle einen zweiten Strom ($I_2$) erzeugt, der sich vom ersten Strom unterscheidet.

5. Bildgebungsvorrichtung nach einem der Ansprüche 1 bis 4, wobei die Kopplungsstufe aus einem ersten Kopplungstransistor ($M_3$) gebildet ist und wobei die Kopplungsstufe aus einem zweiten Kopplungstransistor ($M_4$) gebildet ist, und wobei die Steuersignale ein erstes Kopplungssteuersignal ($vc_1$), das an ein Gate des ersten Kopplungstransistors ($M_3$) angelegt wird, und ein zweites Kopplungssteuersignal ($vc_2$), das an ein Gate des zweiten Kopplungstransistors ($M_4$) angelegt wird, umfassen.

6. Bildgebungsvorrichtung nach Anspruch 5, wobei der Schaltkreis ferner aus einem ersten Schaltelement (41) und einem zweiten Schaltelement (42) gebildet ist, die zu einem externen Vorspannungsblock der Ausleseschaltung (140) gehören, wobei das erste Schaltelement (41) dazu konfiguriert ist, während der Integrationsphase abwechselnd eine Elektrode eines Verstärkungstransistors (M2) des ersten Verstärkers mit einem auf ein erstes Vorspannungspotential (VBDI) eingestelltes Schaltungselement zu koppeln und während der Rücksetzphase das Schaltungselement von der Elektrode des Transistors des ersten Verstärkers zu entkoppeln, wobei das zweite Schaltelement (42) dazu konfiguriert ist, während der Integrationsphase eine Elektrode eines Verstärkungstransistors des zweiten Verstärkers von einem auf ein zweites Vorspannungspotential ($V_{ref}$) eingestellten Schaltungsabschnitt zu entkoppeln und während der Rücksetzphase die Elektrode des Verstärkungstransistors (M5) des zweiten Verstärkers des Schaltungsabschnitts zu koppeln.

7. Bildgebungsvorrichtung nach einem der Ansprüche 5 oder 6, wobei die aktive Rücksetzstufe des Integrationskondensators ($C_{int}$) mit einem Rücksetztransistor ($M_6$) ausgestattet ist, dessen Elektrode auf ein Rücksetzpotential (Vreset) eingestellt und mit dem Integrationskondensator ($C_{int}$) gekoppelt ist, wobei der erste Kopplungstransistor ($M_3$) zwischen einem Gate des Rücksetztransistors ($M_6$) und des ersten Verstärkers angeordnet ist.

8. Bildgebungsvorrichtung nach einem der Ansprüche 5 bis 7, wobei die gepufferte Direktinjektions-Vorspannungsstufe einen sogenannten Direktinjektionstransistor ($M_7$) umfasst, der zwischen dem Fotodetektor (120) und dem Integrationskondensator ($C_{int}$) angeordnet ist, wobei der zweite Kopplungstransistor ($M_4$) zwischen einem Gate des Direktinjektionstransistors ($M_7$) und dem zweiten Verstärker angeordnet ist.

9. Bildgebungsvorrichtung nach einem der Ansprüche 1 bis 8, wobei der erste Stromverstärker ($M_1$-$M_2$) aus zwei Transistoren mit einer gemeinsamen Elektrode besteht und/oder wobei der zweite Stromverstärker ($M_1$-$M_5$) aus zwei Transistoren mit einer gemeinsamen Elektrode besteht.

10. Infrarot-Bildgeber, der eine Vorrichtung nach einem der Ansprüche 1 bis 9 umfasst.

**Claims**

1. Imaging device including a plurality of detection elements, each detection element being formed from a photodetector (120) associated with and connected to a readout circuit (140) of a signal generated by the photodetector (120), the readout circuit (140) being equipped with an integration capacitor ($C_{int}$) for storing charges from the photodetector (120), the readout circuit (140) further comprising:

   - an active reset stage of the integration capacitor equipped with transistors (M1, M5) forming a first current amplifier of a first current source (145),
   - a buffered direct injection (BDI) bias stage of the photodetector (120) equipped with transistors (M1, M2) forming a second current amplifier of a second current source (145),
   - a switching circuit (142, 41, 42) comprising a coupling stage (142) integrated in the readout circuit (140), the switching circuit being controlled by control signals (vc1, vc2) and being configured to:

   - during a reset phase of the integration capacitor ($C_{int}$) corresponding to a first state of said control signals (vc1, vc2): couple said first current source to the integration capacitor ($C_{int}$) and activate the first current amplifier while uncoupling said second current source of the photodetector and deactivating the second amplifier,
   - during an integration phase ($C_{int}$) of a current from the photodiode and corresponding to a second state of said control signals (vc1, vc2), couple said second current source to the photodetector and activate the second current amplifier while uncoupling said first current source of the integration capacitor and deactivating the first amplifier.

2. Imaging device according to claim 1, wherein the first current source and the second current source are the same current source common to the first amplifier (M1-M2) and the second current amplifier (M1-M5).

3. Imaging device according to claim 2, wherein the first amplifier and the second amplifier are formed from a transistor (M1) mounted as a current source and respectively from a first amplification transistor (M2) and a second amplification transistor (M5), the switching circuit being further configured to:

   - during said reset phase, couple the common current source to the integration capacitor ($C_{int}$) while isolating the photodetector from said common current source,
   - during said integration phase ($C_{int}$), couple the common current source to the photodiode while isolating the integration capacitor from said common current source.

4. Imaging device according to claim 3, wherein the transistor (M1) mounted as current source receives on the gate thereof a modulable bias voltage ($v_{bias}$) between said reset phase and said integration phase, such that during said reset phase, the bias voltage ($v_{bias}$) has a first value such that the common current source produces a first current ($I_1$), and such that during the integration phase, the bias voltage has a second value, such that the common current source produces a second current ($I_2$) different from said first current.

5. Imaging device according to one of claims 1 to 4, wherein the coupling stage is formed from a first coupling transistor ($M_3$) and wherein the coupling stage is formed from a second coupling transistor ($M_4$), and wherein the control signals include a first coupling control signal ($vc_1$) applied to the gate of the first coupling transistor ($M_3$) and a second coupling control signal ($vc_2$) applied to the gate of the second

coupling transistor ($M_4$).

6. Imaging device according to claim 5, wherein the switching circuit is furthermore formed from a first switch element (41) and a second switch element (42) belonging to an external bias module to the readout circuit (140), the first switch element (41) being configured to alternately, couple during the integration phase, an electrode of an amplification transistor (M2) of the first amplifier to an circuit element set to a first bias potential (VBDI) and uncouple during said reset phase said circuit element from said electrode of said transistor of said first amplifier, the second switch element (42) being configured to alternately, uncouple during said integration phase, an electrode of an amplification transistor of the second amplifier from a circuit portion set to a second bias potential ($V_{ref}$) and couple during said reset phase, the electrode of said amplification transistor (M5) of said amplifier of said circuit portion.

7. Imaging device according to one of claims 5 or 6, wherein the active reset stage of the integration capacitor ($C_{int}$) is equipped with a reset transistor ($M_6$) having an electrode set to a reset potential (Vreset) and coupled with the integration capacitor ($C_{int}$), the first coupling transistor ($M_3$) being arranged between a gate of the reset transistor ($M_6$) and said first amplifier.

8. Imaging device according to one of claims 5 to 7, wherein the buffered direct injection bias stage comprises a so-called direct injection transistor ($M_7$) arranged between the photodetector (120) and the integration capacitor ($C_{int}$), the second coupling transistor ($M_4$) being arranged between a gate of the direct injection transistor ($M_7$) and said second amplifier.

9. Imaging device according to one of claims 1 to 8, wherein the first current amplifier ($M_1\_M_2$) consists of two transistors having a common electrode and/or wherein the second current amplifier ($M_1\_M_5$) consists of two transistors having a common electrode.

10. Infrared imager comprising a device according to one of claims 1 to 9.

Figure 1

$V_{ref}$

A

3

7

reset

6

$C_{int}$

$V_{pol}$

4

$I_d$

I.R

2

$V_{SUBPV}$

## FIG.1

Figure 2

$V_{reset} < VDD-Vt$

7

VDD

6

$V_{DI}$

$I_d$

2

$V_{SUBPV}$

## FIG.2

Figure 3

FIG.3

Figure 4

FIG.4

Figure 5A

FIG.5A

Figure 5B

FIG.5B

Figure 6

FIG.6

Figure 7

FIG.7

Figure 8

FIG.8

Figure 9

FIG.9

Figure 10

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Low noise readout using Active reset for CMOS APS. **BOYD FOWLER ; MICHAEL D. GODFREY ; JANUSZ BALICKI ; JOHN CANFIELD.** Proceedings of SPIE, the international society for optical engineering. Pixel Devices International Inc, Mai 2000